# EUROPEAN PATENT APPLICATION

(11) **EP 4 300 617 A1**
(43) Date of publication of application: **03.01.2024**
(21) Application number: 22759307.6
(22) Date of filing: 02.02.2022
(51) Int. Cl.: H01M 4/13, H01M 4/131, H01M 4/505, H01M 4/525, H01M 4/62

(54) **ELECTRODE MIXTURE FOR BATTERIES AND NONAQUEOUS ELECTROLYTE SECONDARY BATTERY**

(30) Priority: 26.02.2021 JP 2021029857
(71) Applicant: Panasonic Intellectual Property Management Co., Ltd., Osaka-shi, Osaka 540-6207 (JP)
(72) Inventor: SUZUKI Hirotetsu, Kadoma-shi, Osaka 571-0057 (JP); SAKATA Motohiro, Kadoma-shi, Osaka 571-0057 (JP)
(74) Representative: Novagraaf International SA
(86) International application number: PCT/JP2022/003998
(87) International publication number: WO 2022/181266

(57) **Abstract**

An electrode mixture for batteries according to one embodiment contains a binder and an active material which is capable of absorbing and desorbing lithium ions. This electrode mixture additionally contains a layered silicate compound; and the content of the layered silicate compound is more than 0.1% by mass, and preferably less than 0.9% by mass relative to the mass of the active material. One example of the layered silicate compound is at least one kind of smectite. In addition, it is preferable that this electrode mixture additionally contains carbon nanotubes.

## Description

### TECHNICAL FIELD

The present disclosure generally relates to an electrode mixture for a battery and a non-aqueous electrolyte secondary battery comprising an electrode constituted by using the electrode mixture.

### BACKGROUND ART

An electrode of a non-aqueous electrolyte secondary battery such as a lithium-ion battery commonly comprises a mixture layer including an active material that is able to occlude and release lithium ions. Since the electrode mixture layer significantly affects battery performance such as input and output characteristics, and a capacity, many investigations have been made on the electrode mixture constituting the mixture layer. For example, Patent Literature 1 discloses a mixture for a negative electrode including a negative electrode active material, a binder, and a layered compound. Patent Literature 1 describes that adding the layered compound and the binder in combination can reduce an amount of the binder added, and can inhibit deterioration of physical properties as the negative electrode while keeping an effect of inhibiting separation and segregation during storage and drying.

Patent Literature 2 discloses a mixture for a negative electrode including: fine particles including at least one or more selected from the group consisting of carbon, silicon, and tin; a conductivity-imparting agent; and a dispersant, wherein carbon nanotube is used as the conductivity-imparting agent. Patent Literature 2 discloses that using this mixture for a negative electrode can provide a negative electrode for a lithium-ion battery having high conductivity.

### CITATION LIST

### PATENT LITERATURE

PATENT LITERATURE 1: Japanese Patent No. 5761008
PATENT LITERATURE 2: Japanese Patent No. 5663855

### SUMMARY

### TECHNICAL PROBLEM

The conductivity of an electrode mixture layer is important characteristics for improving battery performance such as input and output characteristics, and capacity of the battery, and many investigations are in progress. The diffusibility of lithium ions in the mixture layer is also important for improving the battery performance, as with the conductivity, but activity for improving the ion diffusibility solely depends on a reduction in a viscosity of an electrolyte solution, and it cannot be said that sufficient investigations are made. Whereas the art in Patent Literatures 1 and 2 does not consider the improvement of the diffusibility of lithium ions in the mixture layer.

It is an object of the present disclosure to provide an electrode mixture for a battery that may reduce diffusion resistance of lithium ions in the electrode mixture layer.

### SOLUTION TO PROBLEM

An electrode mixture for a battery of an aspect of the present disclosure is an electrode mixture for a battery including: an active material that is able to occlude and release lithium ions; and a binder, wherein the electrode mixture further includes a layered silicate salt compound, and a content of the layered silicate compound is greater than 0.1 mass% relative to the mass of the active material.

A non-aqueous electrolyte secondary battery of an aspect of the present disclosure comprises: a positive electrode; a negative electrode; and a non-aqueous electrolyte, wherein at least one of mixture layers of the positive electrode and the negative electrode is constituted with the above electrode mixture.

### ADVANTAGEOUS EFFECT OF INVENTION

According to the electrode mixture for a battery according to the present disclosure, the diffusion resistance of lithium ions in the electrode mixture layer may be reduced. The non-aqueous electrolyte secondary battery using the electrode mixture according to the present disclosure has good diffusibility of lithium ions in the electrode mixture layer and excellent high-rate discharge characteristics, for example.

### BRIEF DESCRIPTION OF DRAWING

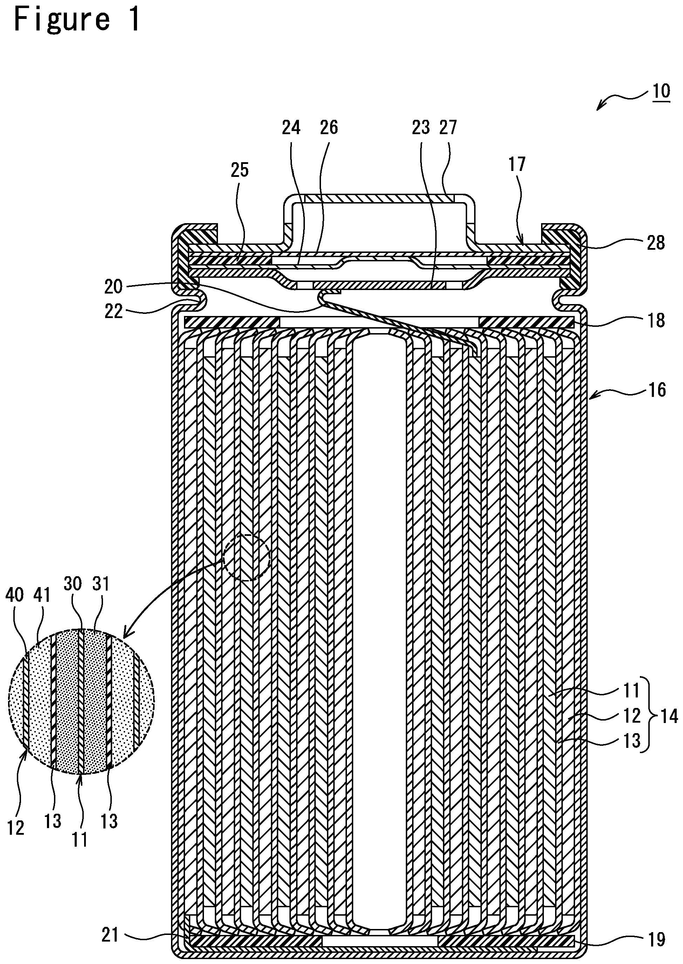

FIG. 1 is a sectional view of a non-aqueous electrolyte secondary battery of an example of an embodiment.

### DESCRIPTION OF EMBODIMENTS

As noted above, smoothing the diffusion of lithium ions in the electrode mixture layer to reduce the diffusion resistance of the ions is an important challenge in the non-aqueous electrolyte secondary battery. The present inventors have made intensive investigation to solve this challenge, and consequently found that the diffusion resistance of the ions is specifically reduced by adding a layered silicate compound at an amount of greater than 0.1 mass% relative to the active material. Specifically, the effect of reducing the diffusion resistance is exhibited more remarkably when smectite is added as the layered silicate compound. Since the layered silicate compound has high affinity with lithium ions, dispersing the layered silicate compound in the electrode mixture is considered to move lithium ions through the layered silicate compound to promote the diffusion of lithium ions.

Furthermore, it has been found that high-rate discharge characteristics of the battery are specifically improved by using an electrode mixture to which carbon nanotube is added together with the layered silicate compound. A mechanism thereof is unclear, but it is considered that the high-rate discharge characteristics are improved by a synergistic effect of the reduction in the diffusion resistance of lithium ions by adding the layered silicate compound and improvement of conductivity by adding carbon nanotube. Although the electrode mixture according to the present disclosure may be applied for a negative electrode, applying for a positive electrode is more effective.

Hereinafter, an example of embodiments of the electrode mixture for a battery and non-aqueous electrolyte secondary battery according to the present disclosure will be described in detail with reference to the drawings. It is anticipated from the beginning to selectively combine a plurality of embodiments and modified examples described below.

Hereinafter, a cylindrical battery in which a wound electrode assembly 14 is housed in a bottomed cylindrical exterior housing can 16 will be exemplified, but the exterior is not limited to a cylindrical exterior housing can, and may be, for example, a rectangular exterior housing can (rectangular battery), a coin-shaped exterior housing can (coin battery), or an exterior constituted with laminated sheets including a metal layer and a resin layer (laminate battery). The electrode assembly is not limited to a wound electrode assembly, and may be a laminated electrode assembly in which a plurality of positive electrodes and a plurality of negative electrodes are alternately stacked with a separator interposed therebetween. Although the electrode mixture for a battery according to the present disclosure may be applied for an aqueous electrolyte secondary battery using an aqueous electrolyte, the electrode mixture is particularly effective for a non-aqueous electrolyte secondary battery using a non-aqueous electrolyte.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), a mixed solvent thereof, and the like. For the electrolyte salt, a lithium salt such as LiPF₆ is used, for example. The non-aqueous electrolyte is not limited to a liquid electrolyte, and may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The separator 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealability inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically an electrode mixture constituting mixture layers of the positive electrode 11 and the negative electrode 12, will be described in detail.

### [Electrode Mixture]

The electrode mixture of an example of an embodiment includes an active material that is able to occlude and release lithium ions, a binder, and a layered silicate salt compound. A content of the layered silicate salt compound in the electrode mixture is greater than 0.1 mass%, and preferably greater than or equal to 0.2 mass%, relative to the mass of the active material. Adding the layered silicate salt compound at an amount of greater than 0.1 mass% relative to the active material into the electrode mixture may remarkably reduce the diffusion resistance of lithium ions in the electrode mixture layer constituted by using the electrode mixture. Examples of the preferable layered silicate salt compound include mica, kaolinite, sericite, smectite, smectite, and the layered silicate salt compound is preferably smectite.

Although the electrode mixture of an example of an embodiment may be applied for the negative electrode 12, the electrode mixture is particularly effective for the positive electrode 11. Hereinafter, description will be made with the mixture layer of the positive electrode 11 constituted with the electrode mixture of an example of an embodiment.

### [Positive Electrode]

The positive electrode 11 has a positive electrode core 30 and a positive electrode mixture layer 31 provided on a surface of the positive electrode core 30. For the positive electrode core 30, a foil of a metal stable within a potential range of the positive electrode 11, such as aluminum and an aluminum alloy, a film in which such a metal is disposed on a surface layer thereof, and the like may be used. The positive electrode mixture layer 31 is preferably provided on both surfaces of the positive electrode core 30. The positive electrode 11 may be produced for example by applying a slurry of a positive electrode mixture on the positive electrode core 30, and drying and subsequently compressing the coating to form the positive electrode mixture layers 31 on both the surfaces of the positive electrode core 30.

The positive electrode mixture layer 31 includes a positive electrode active material, the binder, and the layered silicate salt compound. The positive electrode mixture layer 31 preferably further include a conductive agent. The positive electrode mixture layer 31 is formed for example by applying the slurry of the positive electrode mixture including the positive electrode active material, the binder, the conductive agent, and the layered silicate salt compound on the positive electrode core 30. A dispersion medium of the positive electrode mixture slurry is not particularly limited as long as it may disperse the positive electrode mixture, and an example thereof is N-methyl-2-pyrrolidone (NMP). The layered silicate salt compound may be formed into a slurry after mixing the layered silicate salt with a powder of the positive electrode active material, and the like, or may be added into a slurry in which the positive electrode active material and the like are dispersed to be mixed with the positive electrode active material and the like.

Examples of the binder included in the positive electrode mixture layer 31 (positive electrode mixture) include a fluororesin such as polytetrafluoroethylene (PTFE) and polyvinylidene fluoride (PVdF), polyacrylonitrile (PAN), a polyimide, an acrylic resin, and a polyolefin. With these resins, a cellulose derivative such as carboxymethylcellulose (CMC) or a salt thereof, polyethylene oxide (PEO), and the like may be used in combination. A content of the binder is, for example, greater than or equal to 0.5 mass% and less than or equal to 2.0 mass% relative to the mass of the positive electrode mixture layer 31.

The positive electrode active material is preferably a lithium-containing transition metal composite oxide. Examples of an element contained in the lithium-containing transition metal composite oxide include Ni, Co, Mn, Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, Si, V, Cr, Fe, Cu, Zn, Ru, Rh, Re, Pd, Ir, Ag, Bi, Sb, B, Al, Ga, In, P, Zr, Hf, Nb, Mo, and W. Among them, at least one of Ni, Co, and Mn is preferably contained.

An example of preferable lithium-containing transition metal composite oxides has a layered rock-salt crystal structure, and is a composite oxide represented by the general formula: LiNiₓM₁₋ₓO₂, wherein M represents at least one selected from the group consisting of Al, Mn, and Co, and 0.3 ≤ x < 1.0. A composite oxide with a high Ni content is effective for increasing the capacity of the battery. The composite oxide represented by the above general formula has good compatibility with a layered silicate salt compound, and using this composite oxide may attempt to increase the capacity of the battery and more effectively improve diffusibility of lithium ions in the positive electrode mixture layer 31.

The positive electrode active material contains the lithium-containing transition metal composite oxide represented by the above general formula as a main component. Here, the main component means a component having the highest mass ratio among constituting components of the composite oxide. Although the positive electrode mixture layer 31 may contain a composite oxide other than the composite oxide represented by the above general formula in combination as the positive electrode active material, a content of the above composite oxide is preferably greater than or equal to 50 mass%, and may be substantially 100 mass%. The composition of the composite oxide may be measured by using an ICP emission spectrometer (iCAP6300, manufactured by Thermo Fisher Scientific K.K.).

The lithium-containing transition metal composite oxide is of, for example, secondary particles formed by aggregation of a plurality of primary particles. An example of a median diameter (D50) of the lithium-containing transition metal composite oxide on a volumetric basis is greater than or equal to 1 µm and less than or equal to 20 µm, or greater than or equal to 2 µm and less than or equal to 15 µm. The D50 is a particle diameter at which a volumetric integrated value is 50% in a particle size distribution measured by a laser diffraction scattering method. A BET specific surface area of the composite oxide is, for example, greater than or equal to 1.0 mm²/g and less than or equal to 4.0 mm²/g. The BET specific surface area within this range easily achieves both of the high durability and the high capacity. The BET specific surface area is measured in accordance with a BET method (nitrogen adsorption method) described in JIS R1626.

As noted above, the positive electrode mixture layer 31 includes the layered silicate salt compound. A content of the layered silicate salt compound is 0.1 mass%, preferably greater than or equal to 0.2 mass%, and more preferably greater than or equal to 0.3 mass%, relative to the mass of the positive electrode active material. Adding the layered silicate salt compound at an amount of greater than 0.1 mass% relative to the positive electrode active material enables the layered silicate salt compound to effectively promote the diffusion of lithium ions, and the diffusibility of lithium ions in the positive electrode mixture layer 31 is specifically improved. In particular, adding greater than or equal to 0.2 mass% of the layered silicate salt compound makes this effect more remarkable. If the amount of the layered silicate salt compound added is less than 0.1 mass%, the effect by the addition is not obtained.

The content of the layered silicate salt compound is, for example, less than or equal to 1 mass%, and preferably less than 0.9 mass%, relative to the mass of the positive electrode active material. The content of the layered silicate salt compound is more preferably less than or equal to 0.8 mass%, and particularly preferably less than or equal to 0.7 mass%. Adding the layered silicate salt compound at a larger amount than the predetermined amount tends to decrease the high-rate discharge characteristics. An example of a preferable range of the content of the layered silicate salt compound is greater than or equal to 0.2 mass% and less than or equal to 0.8 mass% (greater than or equal to 0.2 mass%, and less than or equal to 0.8 mass%), greater than or equal to 0.3 mass% and less than or equal to 0.7 mass%, or greater than or equal to 0.4 mass% and less than or equal to 0.6 mass%, relative to the mass of the positive electrode active material. The content of the layered silicate salt compound within the above range may effectively achieve both of the improvement of the diffusibility of lithium ions and the good high-rate discharge characteristics.

A content of the layered silicate salt compound relative to the positive electrode mixture layer 31 is, for example, greater than or equal to 0.2 mass% and less than or equal to 0.8 mass%, and preferably same as the above content relative to the positive electrode active material. A mass ratio between the layered silicate salt compound and the binder is not particularly limited, and preferably greater than or equal to 1:2 and less than or equal to 2:1 or greater than or equal to 1:1.5 and less than or equal to 1.5:1. A mass ratio between the layered silicate salt compound and the conductive agent is not particularly limited, and preferably greater than or equal to 1:1.5 and less than or equal to 1.5:1 or greater than or equal to 1:1.3 and less than or equal to 1.3:1. The content of the layered silicate salt compound is, for example, less than or equal to the content of the binder and greater than or equal to the content of the conductive agent.

The layered silicate salt compound is preferably at least one type of smectite. Examples of the preferable smectite include montmorillonite, hectorite, beidellite, nontronite, saponite, and sauconite. Among the layered silicate salt compound, smectite has high affinity with lithium ions, and more effectively improves the diffusibility of lithium ions in the positive electrode mixture layer 31. The positive electrode mixture layer 31 includes at least one smectite selected from the group consisting of montmorillonite, hectorite, beidellite, nontronite, saponite, and sauconite, for example. Among them, montmorillonite is preferable.

For the layered silicate salt compound, smectite subjected to an ion-exchange treatment may be used. Smectite has a weak layered charge, and has a structure in which cations that are exchangeable (such as sodium ions and calcium ions) are held between the layers. This cation is also called as an exchangeable cation. An example of the preferable ion-exchanged smectite is one in which the exchangeable cations are exchanged into lithium ions. In the ion-exchanged smectite, greater than or equal to 95 mass% of the exchangeable cations such as sodium ions are exchanged into lithium ions, for example.

For the layered silicate salt compound, only the smectite in which the exchangeable cations are exchanged into lithium ions may be used. Alternatively, the smectite in which the exchangeable cations are exchanged into lithium ions and the smectite not subjected to the ion-exchange treatment may be used in combination. When these smectites are used in combination, a mass ratio between the former and the latter is, for example, greater than or equal to 5:1 and less than or equal to 1:5, and a preferable example thereof is greater than or equal to 4:1 and less than or equal to 1:1, or greater than or equal to 4:1 and less than or equal to 2:1.

The layered silicate salt compound is preferably dispersed in an entirety of the positive electrode mixture layer 31 without unevenly presence in a part of the positive electrode mixture layer 31. The layered silicate salt compound is distributed at a substantially uniform concentration in any region in the positive electrode mixture layer 31. The layered silicate salt compound is present between particles of the positive electrode active material in a state of contacting with particle surfaces of the positive electrode active material. The layered silicate salt compound is of flake particles in which many layers are stacked. In a part of the layered silicate salt compound, the layer constituting the particles may be separated to be dispersed and atomized in the positive electrode mixture layer 31.

The conductive agent included in the positive electrode mixture layer 31 forms a good conductive path in the mixture layer. Although the conductive agent may be: particle conductive agents such as carbon black, acetylene black, Ketjenblack, and graphite; and fibrous conductive agents of conductive agents and the like such as vapor-grown carbon fiber (VGCF), electrospinning carbon fiber, polyacrylonitrile (PAN)-based carbon fiber, pitch-based carbon fiber, and graphene, the positive electrode mixture layer 31 preferably includes at least carbon nanotube (CNT). In the positive electrode mixture layer 31, presence of both of the layered silicate salt compound and CNT specifically improves the high-rate discharge characteristics of the battery.

A content of CNT is, for example, greater than or equal to 0.05 mass% and less than or equal to 2.0 mass%, more preferably greater than or equal to 0.1 mass% and less than or equal to 1.5 mass%, and particularly preferably greater than or equal to 0.2 mass% and less than or equal to 1.0 mass%, relative to the mass of the positive electrode mixture layer 31. The content of CNT within the above range may more effectively improve the high-rate discharge characteristics. In the positive electrode mixture layer 31, only CNT may be included as the conductive agent.

CNT may be any of single wall CNT (SWCNT) and multiwall CNT (MWCNT), but is more preferably MWCNT. For MWCNT, CNT with a tubular structure in which graphene sheets composed of six-membered carbon rings are wound parallel to a fiber axis, CNT with a platelet structure in which graphene sheets composed of six-membered carbon rings are arranged perpendicular to a fiber axis, CNT with a herringbone structure in which graphene sheets composed of six-membered carbon rings are wound with an oblique angle to a fiber axis, and the like may be used, for example. Into the positive electrode mixture layer 31, two or more kinds of CNT may be added.

An average diameter of CNT is, for example, less than or equal to 50 nm, preferably less than or equal to 40 nm, more preferably less than or equal to 25 nm, and particularly preferably less than or equal to 20 nm. A lower limit of the average diameter of CNT is not particularly limited, and an example thereof is 1 nm or 5 nm. An example of a preferable range of the average diameter of CNT is greater than or equal to 1 nm and less than or equal to 20 nm, or greater than or equal to 5 nm and less than or equal to 20 nm. The average diameter of CNT within the above range enhances the effect of improving the high-rate discharge characteristics compared with a case where CNT having an average diameter out of the above range is used.

An average fiber length of CNT is, for example, greater than or equal to 0.5 µm, preferably greater than or equal to 0.7 µm, more preferably greater than or equal to 0.8 µm, and particularly preferably greater than or equal to 1 µm. An upper limit of the average fiber length of CNT is not particularly limited, and an example thereof is 10 µm or 5 µm. An example of a preferable range of the average fiber length of CNT is greater than or equal to 1 µm and less than or equal to 10 µm, or greater than or equal to 1 µm and less than or equal to 5 µm. The average fiber length of CNT within the above range enhances the effect of improving the high-rate discharge characteristics compared with a case where CNT having an average fiber length out of the above range is used.

The average diameter and average fiber length of CNT are determined by measuring diameters and fiber lengths of 100 CNTs selected from a surface TEM image of the positive electrode mixture layer 31 and the sectional SEM image of the positive electrode mixture layer 31 to average these measured values, respectively.

### [Negative Electrode]

The negative electrode 12 has a negative electrode core 40 and a negative electrode mixture layer 41 provided on a surface of the negative electrode core 40. For the negative electrode core 40, a foil of a metal stable within a potential range of the negative electrode 12, such as copper, a film in which such a metal is disposed on a surface layer thereof, and the like may be used. The negative electrode mixture layer 41 is preferably provided on both surfaces of the negative electrode core 40. The negative electrode 12 may be produced for example by applying a slurry of a negative electrode mixture on the negative electrode core 40, and drying and subsequently compressing the coating to form the negative electrode mixture layers 41 on both the surfaces of the negative electrode core 40. The negative electrode mixture layer 41 (negative electrode mixture) includes a negative electrode active material and a binder. The negative electrode mixture layer 41 may further include the above layered silicate salt compound.

The negative electrode mixture layer 41 includes, for example, a carbon-based active material that reversibly occludes and releases lithium ions as the negative electrode active material. A preferable carbon-based active material is graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material constituted with at least one of Si and a Si-containing compound may be used, and the carbon-based active material and the Si-based active material may be used in combination.

For the binder included in the negative electrode mixture layer 41, a fluororesin, PAN, a polyimide, an acrylic resin, a polyolefin, and the like may be used as in the case of the positive electrode 11, but styrene-butadiene rubber (SBR) is preferably used. The negative electrode mixture layer 41 preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination. The negative electrode mixture layer 41 may include a conductive agent.

### [Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, polypropylene, and a copolymer of ethylene and an α-olefin, cellulose, and the like are preferable. The separator 13 may have any of a single-layered structure and a stacked structure. On a surface of the separator 13, a heat-resistant layer including inorganic particles, a heat-resistant layer constituted with a highly heat-resistant resin such as an aramid resin, a polyimide, and a polyamideimide, and the like may be formed.

### EXAMPLES

Hereinafter, the present disclosure will be further described with Examples, but the present disclosure is not limited to these Examples.

### <Example 1>

### [Production of Positive Electrode]

As a positive electrode active material, a lithium-containing transition metal composite oxide was used. The positive electrode active material, multiwall carbon nanotube (MWCNT), polyvinylidene fluoride, and a montmorillonite A1 (KUNIPIA M, manufactured by KUNIMINE INDUSTRIES CO., LTD.) in which exchangeable cations were exchanged into lithium ions were mixed at a solid content mass ratio of 100:0.4:0.6:0.2, and N-methyl-2-pyrrolidone (NMP) was used as a dispersion medium to prepare a positive electrode mixture slurry. Then, the positive electrode mixture slurry was applied on a positive electrode core made of aluminum foil, the coating was dried and compressed, and then cut to a predetermined electrode size to obtain a positive electrode.

### [Preparation of Non-Aqueous Electrolyte solution]

Ethylene carbonate (EC), ethyl methyl carbonate (EMC), and dimethyl carbonate (DMC) were mixed at a predetermined volume ratio. Into this mixed solvent, LiPF₆ was added to obtain a non-aqueous electrolyte solution.

### [Production of Test Cell]

The above positive electrode and a negative electrode made of lithium metal foil were oppositely disposed with a separator interposed therebetween to constitute an electrode assembly, and the electrode assembly and the above non-aqueous electrolyte were housed in an exterior constituted with an aluminum laminated sheet. Thereafter, an opening of the exterior was sealed to obtain a test cell (non-aqueous electrolyte secondary battery).

A diffusion resistance of lithium ions in the positive electrode mixture layer, electron interface resistance, and 1C discharge capacity of the test cell of Example 1 were evaluated by the following methods (the same applies to Examples and Comparative Examples, described later). The evaluation results of the diffusion resistance and electron interface resistance were calculated from a DC-IR measurement result with 0.3C discharge, and shown as values relative to the results of Comparative Example 1 being 100. Table 1 shows each evaluation result together with a type and content of the layered silicate salt compound.

### [Evaluation of Diffusion Resistance and Electron Interface Resistance]

Under a temperature environment at 25°C, the test cell was charged until a state of charge (SOC) reached 50%. Then, the cell was discharged at a current value of 0.3 C for each 10 seconds to measure battery voltages during the discharge, and the battery voltages were plotted relative to the current values to determine a resistance during the discharge.

### [Evaluation of 1C Discharge Capacity]

Under a temperature environment at 25°C, the test cell was charged at a constant current of 0.2 C until a battery voltage reached 4.2 V, and then charged at a constant voltage of 4.2 V until a current value reached 0.02 C. Thereafter, the cell was discharged at a constant current of 1 C until the battery voltage reached 2.5 V, and a discharge capacity at this time was calculated.

### <Examples 2 to 9>

Test cells were produced in the same manner as in Example 1 except that, in the production of the positive electrode, the amount of the montmorillonite A1 added was changed so that the content of the montmorillonite A1 was the value shown in Table 1.

### <Example 10>

A test cell was produced in the same manner as in Example 4 except that, in the production of the positive electrode, a montmorillonite A2 (KUNIPIA F, manufactured by KUNIMINE INDUSTRIES CO., LTD.), which was not subjected to the ion-exchange treatment, was used instead of the montmorillonite A1.

### <Examples 11 to 13>

Test cells were produced in the same manner as in Example 1 except that, in the production of the positive electrode, the montmorillonites A1 and A2 were used in combination, and a mass ratio thereof was set to be A1:A2 = 3:1, 1: 1, and 1:3, respectively.

### <Example 14>

A test cell was produced in the same manner as in Example 1 except that, in the production of the positive electrode, acetylene black (AB) was added instead of MWCNT at 1.0 mass% relative to the positive electrode active material.

### <Comparative Example 1>

A test cell was produced in the same manner as in Example 1 except that, in the production of the positive electrode, the montmorillonite A1 was not added.

### <Comparative Example 2>

A test cell was produced in the same manner as in Example 1 except that, in the production of the positive electrode, the montmorillonite A1 was added so that the content of the montmorillonite A1 was 0.1 mass% relative to the positive electrode active material.

**[Table 1]**

| | Layered silicate salt | Conductive agent | Diffusion resistance | Electron interface resistance | 1C discharge capacity [mAh/g] |
|---|---|---|---|---|---|
| Example 1 | A1, 0.2mass% | CNT | 94.6 | 100.5 | 183.6 |
| Example 2 | A1, 0.3 mass% | CNT | 93.3 | 100.9 | 185.8 |
| Example 3 | A1, 0.4 mass% | CNT | 86.3 | 101.0 | 185.9 |
| Example 4 | A1, 0.5 mass% | CNT | 78.5 | 112.0 | 184.7 |
| Example 5 | A1, 0.6 mass% | CNT | 74.8 | 112.5 | 185.2 |
| Example 6 | A1, 0.7 mass% | CNT | 68.5 | 114.2 | 184.0 |
| Example 7 | A1, 0.8 mass% | CNT | 71.3 | 114.5 | 183.0 |
| Example 8 | A1, 0.9mass% | CNT | 79.6 | 115.0 | 176.5 |
| Example 9 | A1, 1.0mass% | CNT | 83.0 | 115.4 | 180.5 |
| Example 10 | A2, 0.5 mass% | CNT | 89.8 | 111.5 | 184.6 |
| Example 11 | A1:A2=3:1 0.5 mass% | CNT | 77.0 | 111.3 | 184.6 |
| Example 12 | A1:A2=1:1 0.5 mass% | CNT | 82.8 | 111.5 | 184.6 |
| Example 13 | A1:A2=1:3 0.5 mass% | CNT | 88.9 | 111.5 | 184.6 |
| Example 14 | A1, 0.5 mass% | AB | 93.0 | 113.0 | 178.1 |
| Comparative Example 1 | - | CNT | 100 | 100 | 181.4 |
| Comparative Example 2 | A1, 0.1mass% | CNT | 100.7 | 100.0 | 179.8 |

As shown in Table 1, any of the test cells of Examples, diffusion resistance of lithium ions is remarkably reduced compared with the test cells of Comparative Examples, while electron interface resistance is slightly high. In particular, when CNT is used as the conductive agent and the content of the layered silicate salt compound is greater than 0.1 mass% and less than 0.9 mass%, the diffusibility of lithium ions is remarkably improved so that excellent high-rate discharge characteristics can be achieved.

### REFERENCE SIGNS LIST

10 non-aqueous electrolyte secondary battery, 11 positive electrode, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 positive electrode core, 31 positive electrode mixture layer, 40 negative electrode core, 41 negative electrode mixture layer

## Claims

1. An electrode mixture for a battery, including:
an active material that is able to occlude and release lithium ions; and
a binder, wherein
the electrode mixture further includes a layered silicate salt compound, and
a content of the layered silicate compound is greater than 0.1 mass% relative to the mass of the active material.

2. The electrode mixture according to claim 1, wherein the electrode mixture further includes carbon nanotube.

3. The electrode mixture according to claim 1 or 2, wherein the content of the layered silicate compound is less than 0.9 mass% relative to the mass of the active material.

4. The electrode mixture according to any one of claims 1 to 3, wherein the layered silicate salt compound includes at least one type of smectite.

5. The electrode mixture according to claim 4, wherein the smectite includes montmorillonite.

6. The electrode mixture according to any one of claims 1 to 5, wherein the active material includes a lithium-containing transition metal composite oxide.

7. The electrode mixture according to claim 6, wherein the lithium-containing transition metal composite oxide has a layered rock-salt crystal structure, and includes a composite oxide represented by the general formula: LiNiₓM₁₋ₓO₂, wherein M represents at least one selected from the group consisting of Al, Mn, and Co, and 0.3 ≤ x < 1.0.

8. A non-aqueous electrolyte secondary battery, comprising:
a positive electrode;
a negative electrode; and
a non-aqueous electrolyte, wherein
at least one of mixture layers of the positive electrode and the negative electrode is constituted with the electrode mixture according to any one of claims 1 to 7.
